# EUROPEAN PATENT APPLICATION

(11) **EP 4 610 838 A1**
(43) Date of publication of application: **03.09.2025**
(21) Application number: 24160329.9
(22) Date of filing: 28.02.2024
(51) Int. Cl.: G06F 15/78

(54) **DYNAMIC PARTIAL FPGA RECONFIGURATION**

(71) Applicant: Siemens Aktiengesellschaft, 80333 München (DE)
(72) Inventor: Matschnig, Martin, 3430 Tulln (AT); Cech, Christian, 2483 Ebreichsdorf (AT); Chilku, Bekim, 1190 Wien (AT); Fischer, Bernhard, 2122 Wolkersdorf im Weinviertel (AT); Hinterstoisser, Thomas, 2102 Bisamberg (AT); Keskin, Talha, 1110 Wien (AT)
(74) Representative: Siemens Patent Attorneys

(57) **Abstract**

Present invention concerns a Field Programmable Gate Array (100, 200), FPGA, the FPGA comprising: Block RAM (250); a plurality of configurable logic elements; and a container (160, 280). The container (160, 280) comprises a predetermined subset of said logic elements; such that a configuration of elements in the container (160, 280) may be changed independently from a configuration of logic elements outside the container (160, 280). It is proposed to store an image (A-D) in said block RAM (250), the image (A-D) comprising predetermined configuration data for said container (160, 280). Then, said container (160, 280) may be dynamically reconfigured based on the image (A-D). The invention also concerns a method for operating an FPGA, a computer program product and a storage medium.

## Description

Present invention concerns a field programmable gate array with dynamic partial reconfiguration functionality.

### Background of the Invention

Some FPGA (Field Programmable Gate Array) products offer the possibility to reconfigure only a portion of the device while the rest of the system continues its operation without interference. This Dynamic Partial Reconfiguration (DPR) feature is very powerful and is available in common state-of-the-art SRAM (Static Random-Access Memory)-based FPGAs, e.g., Intel STRATIX or XILINX Zynq Ultrascale+.

To make use of the DPR mechanism, a dedicated area, called container, within the available chip space must be exclusively reserved for hosting smaller interchangeable partial designs, which will can called Hardware Apps (HWAs). To configure an FPGA to implement an HWA, binary configuration data may be downloaded through a dedicated configuration interface. The configuration data may be called an image and is generally stored in an external component or on a connected host. The configuration becomes active at the time it is written into configuration RAM of the FPGA.

In many cases, the time required for downloading the image and using it for configuring the FPGA to implement the HWA is too long so that DPR cannot be used in a project.

### Disclosure of the Invention

A problem underlying the invention consists in providing an improved technique to allow reconfiguration in the context of Dynamic Partial Reconfiguration of an FPGA. In particular, fast reconfiguration during runtime may be addressed.

The invention solves the given problem by means of subjectmatter defined in enclosed independent claims. Dependent claims describe preferred embodiments.

Present invention starts from a Field Programmable Gate Array, FPGA, the FPGA comprising block RAM (BRAM), configuration RAM (CRAM); a plurality of configurable logic elements; and at least one container. The at least one container comprises a respective predetermined subset of said logic elements; such that a configuration of elements in the respective container may be changed independently from a configuration of logic elements outside the respective container.

A block RAM is a memory, which data elements can be read or written in block with an adjustable width and length of a data set. The amount of block RAM, i.e. its memory blocks, may be associated dynamically to a container. Thus, a flexible use of data storage can be achieved.

The FPGA can distinguish between two different RAM types for configuration data to enable an efficient reconfiguration. Static configuration data can be stored withing the CRAM. The images for both configuration memories, CRAM and BRAM, can be provided for instance by external interfaces of the FPGA.

The logic elements can be any semiconductor components integrated on a FPGA, like digital parts or gates, complex circuitries, or even analog devices or mixed signal devices.

Therefore, a logic element equals any configurable semiconductor element included on the FPGA.

According to a first aspect of the present invention a method for operating the given FPGA comprises steps of determining an available portion of the block RAM; of installing at least one image into said portion of the block RAM, the at least one image comprising predetermined configuration data for said respective at least one container; and of dynamically configuring elements of said respective at least one container according to respective image data in the Block RAM.

Dynamically configuring elements means to set the current configuration of the logic elements of the FPGA using the image data from the container received from the Block RAM as respective configuration data for the logic elements.

By determining an available portion of the block RAM it can be verified whether a new image can be loaded to the block RAM as an actual image for an actual FPGA configuration.

It also can be verified, if more than one image fits into the block RAM and can be loaded into the block RAM, which allows an efficient handling of more than one image for a subsequent execution at run-time by the FPGA.

The operation of a FPGA includes the method steps of partial reconfiguration (PR) during its run-time.

The image comprises predetermined configuration data for a respective container as image data.

The images can be provided by the FPGA, e.g. at run-time by the FPGA, or external interfaces.

A direct link can be established between Configuration RAM (CRAM) and Block RAM (BRAM) so that BRAM can be dynamically utilized to extend the CRAM. Image download operations may be less frequent and reconfiguring a container can be carried out faster.

Thus, the BR_AM is used to extend dynamically the CRAM at runtime by the FPGA and an efficient overall memory utilization is obtained, and further, the overall system efficiency is improved due to less data traffic on the data bus on the FPGA.

Independent configurations may mean that a configuration of one or more logic elements in the container, a connection of a logic element in the container to an interface, or a connection between several logic elements in the container may be done or changed without changing a configuration of elements outside the container. Conversely, a configuration that concerns an element outside the container may not affect the configuration of elements inside it.

As mentioned before, it can be verified, if more than one image fits into the block RAM and more than one image can be loaded into the block RAM, which allows an efficient handling of one or more images for a subsequent execution at run-time at the FPGA.

Dynamic reconfiguration may be triggered by an external event or by a process, e.g. as part of an application or an application module, running on said FPGA. Reconfiguration may even be triggered by a condition inside said container. Said container may be reconfigured at run-time, while another portion of the FPGA may be working on a predetermined task. For example, there may be a first container with logic for analyzing data being read via an interface. According to a characteristic of the data a second container may be reconfigured to form a Hardware App (HWA) for filtering or otherwise processing said data according to the determined characteristic. The second container may for instance implement different compression engines for the read data. An efficient compression method may be implemented according to the characteristic of the data.

By storing the image in local configuration memory, especially in block RAM, a container may be reconfigured very fast and without the requirement for obtaining configuration data from an external source at reconfiguration time. Dynamic Partial Reconfiguration of the FPGA may be carried out more autarkic. This may be especially relevant for process control where DPR must be completed within a predetermined time to maintain control over some external machinery. As the configuration data is already on the FPGA, the DPR may be done swift and safely.

A predetermined amount of Block RAM may be associated to a container. Different containers may have matching or different sets of configurable elements. Also, sections of BR_AM associated with different containers may have different sizes. Thus, flexible use of PR containers may be provided. A container may also be called a slot or PR slot.

The predetermined amount of Block RAM can be provided by the FPGA, e.g. at run-time by the FPGA, or external interfaces.

Reconfiguring a container or PR slot may comprise replacing a first image of a first HWA installed on the PR container with a second image of a second HWA. Reconfiguration of a PR slot or a container may in particular be performed at run-time, e.g., while the FPGA executes one or more other applications, and/or after the first application has finished a task, but before a desired overall result is achieved. PR slot resources may be optimized for different applications, allowing efficient operation of the FPGA even with limited resources, in particular when sequentially operating applications are required that may be executed with the resources of the same PR slot. Reconfiguration may comprise, and/or be based on, installation of an image to the container or PR slot.

Block RAM forms an integral part of many contemporary FPGAs so that present method may be universally usable. By utilizing only a portion of the block RAM that is not otherwise in use, other applications or HWAs running on said FPGA may not be affected in the negative. Present method may adapt to run with different amounts of usable BR_AM.

Block RAM may be configured to hold different images for one container or for several different containers. It may be considered that the number of images stored in the BR_AM may be configurable. Flexible set-up of an FPGA may thus be provided, e.g., allowing adapting to different tasks and/or use-cases.

A PR slot or container in general may have a preconfigured size, which may not be dynamically reconfigurable. A container or PR slot may comprise different components, e.g., control components (e.g., like processor resources, in particular of a DSP), and/or memory components, e.g., a plurality of cells and/or blocks of memory, and/or programmable logic, for example ALM (Adaptive Logic Module) components. Different images or applications may in particular be based on reconfigured programmable logic. The memory structure, e.g., size, number of cells, and/or addressing, of a PR slot may be constant under dynamic reconfiguration.

An image may be downloaded to the Block RAM from a depository external to the FPGA. Downloading may imply using an interface of the FPGA to an external data source. An image may be downloaded at an uncritical time to be available for dynamic reconfiguration with low delay. Downloading image data may be performed before reconfiguration of said container. The external depository may be on an external device or memory, and/or external server or database. The depository may be accessible as a peripheral or an external host to the FPGA. Downloading may be controlled according to a predetermined condition or event that is checked by some logic of the FPGA.

Multiple images may be downloaded to the block RAM. The images may be downloaded in plain or compressed form. Compressed data may comprise one or several images. Downloaded images may be intended for the same or for different containers. In one embodiment of present invention, all images required for operation of the FPGA may be downloaded before the FPGA starts operation. In another embodiment, reloading of an image may be done during runtime.

In one embodiment, the images stored in the block RAM may be images for one PR slot, and/or may represent successive applications to be executed by the PR slot, e.g., different successive layers of a neural network.

The images can be determined e.g. by including dynamic application information to be executed on the FPGA at all and can be provided by external interfaces before the execution at the FPGA.

Thus, the configuration of the FPGA can be adapted specifically to a sequence of execution modules of an application, like different stages of applying a machine learning task or any application of artificial intelligence. The specific adoption allows an efficient execution on a FPGA with limited resources compared to a computer of a server infrastructure or a desktop client. The improved efficiency concerns not only the system runtime parameters like memory usage or bus traffic, but also the power consumption and heat dissipation, which can be relevant especially for embedded devices.

The method may especially be carried out, completely or in part, by electronic execution means like a computer system. To these ends, the method may be formulated as a computer program product with program code means. The above-described system may comprise the computer system. Advantages or features of the method may apply to the method and vice versa. It is to be noted that such a computer system may be part of an FPGA as described herein or vice versa.

Furthermore, the invention concerns a computer program product, the computer program product comprising instructions causing processing circuitry to perform a method as described herein when executed on the processing circuitry. The instructions may be computer-executable. The processing circuitry may comprise, and/or be implemented as, a FPGA and/or controller as described herein. The computer program product may comprise one or more modules associated to each action of the method.

Moreover, a storage medium storing a computer program product as described herein is proposed. The storage medium may comprise and/or be implemented as one or more memories and/or have different parts or components of the program product stored on different memories or media. The storage medium may be non-transitory. It may be considered that the storage medium may be computer-readable.

According to yet another aspect of present invention there is proposed a Field Programmable Gate Array, FPGA, the FPGA comprising a plurality of configurable logic elements; at least one container and block RAM. The container comprises a predetermined subset of said configurable logic elements; wherein a configuration of elements in the container may be changed independently from a configuration of logic elements outside the container. The Block RAM may be configured to hold at least one image, the image comprising predetermined configuration data for a container.

The FPGA is preferred to be adapted to dynamically configure elements of said at least one container according to image data in the Block R_AM.

The FPGA may comprise a large number of logic elements. A logic element may comprise an element that is known as configurable logic block (CLB) or logic array block (LAB); also there may be one or more I/O pads and/or a routing channel for interconnecting CLBs / LABs. Further elements may comprise hard blocks which realize more complex elements like multipliers, generic DSP blocks, embedded processors, high speed I/O logic or embedded memories. The logic elements may be configured and interconnected such that a predetermined behavior or functionality is achieved.

In general, a logic block consists of several logical cells. A typical cell consists of a 4-input lookup table (LUT), a full adder (FA) and a D-type flip-flop. The LUT might be split into two 3-input LUTs. In normal mode those are combined into a 4-input LUT through a first multiplexer (MUX). In arithmetic mode, their outputs are fed to the adder. The selection of mode is programmed into a second MUX. The output can be either synchronous or asynchronous, depending on the programming of a third MUX. In practice, entire or parts of the adder are stored as functions into the LUTs in order to save space.

Present invention may allow quick reconfiguration of elements inside a container without the need of time-consuming download of configuration data from an external source at the time of reconfiguration. A container may be reconfigured without the time penalty that is generally associated with downloading configuration data. Reconfiguration may be done faster or more often, allowing for more flexibility in operating said FPGA. The FPGA may be adapted to perform a configuration change of a container during runtime, i.e. while other parts of the FPGA are already configured or working.

Block RAM (BRAM) in an FPGA comprises random access memory (RAM) that is organized in blocks of predetermined size. Each block may be configured to have a width and a depth, wherein a product of the width and the depth matches the block size. Width and depth must usually be base-two numbers. A block of such RAM may be configured for different purposes. For instance, BRAM may be configured as single-ported RAM, dual ported RAM or a FIFO. The latter two options can be used to transfer information between different clock domains. Data transfer rates inside the FPGA to or from BRAM may be much higher than a transfer rate over an interface to an external storage or host, allowing quick and/or direct access to the memory, with low latency and large data transfer rates, making very fast container reconfiguration possible. It is proposed to use BR_AM that is not employed otherwise for storing configuration data for a container.

BRAM may be connectable to an associated PR container. The connection may be direct or via an interface or port, which may be configured to be provided on the FPGA, e.g., in one of the areas or regions of the FPGA. The connection may be a parallel or serial connection. It may be considered that the connection may be in addition to, and/or in lieu of an indirect connection, e.g., via a bus. Quick transfer of an image within the FPGA may hence be provided.

In some variants, the FPGA may comprise a DPR controller. The DPR controller may be connected and/or connectable, and/or configured and/or configurable to be connected or connectable, to the BRAM. The connection may be a serial or parallel connection that runs directly or via an interface. The DPR controller may be adapted to read image data from the BR_AM and write it to the CRAM to configure a corresponding HWA.

The DPR controller may be hence connected to control transfer of image data, e.g., from the BRAM to the PR container, between different sections of BR_AM and/or between BR_AM and additional memory. In some cases, data transfer to a PR container may occur via a bus. If there is a direct connection between the PR container and the block R_AM, this direct connection may be used, e.g., under control of the DPR controller.

The size of the Block RAM that is used for storing an image may be configurable. Block RAM is generally divided into blocks of predetermined size, e.g. 4k. Each block may be configured in different ways, concerning access to it or its storage width in bits. It is preferred to use whole BR_AM blocks for storing an image. One image may overlap two or more blocks. In another embodiment, an image may be stored in an unused portion of a block that is partly dedicated to another purpose.

The FPGA may also comprises configuration memory (CRAM) which comprises internal configuration memory and additional memory. Once data is written into CRAM, a corresponding configuration of digital elements become active. BRAM is separate from CRAM and can be configured for different purposes.

The FPGA may comprise a first port and a second port to the Block RAM, each port allowing read and/or write access to the Block RAM independently from the other port. BR_AM may be configurable such that the two ports may be used at the same time. The BR_AM may be used as a buffer or cache in sequential access so that image data may be downloaded and buffered at the same time as buffered image data is read. This may be advantageous especially if the image in question is large. In one embodiment the BRAM may hold more than one image. One image may be read through one interface while another image may be written concurrently through the other interface.

BR_AM may thus be used as a kind of configuration cache from which configuration data may be read over one port while the cache is filled with data from an external source over the other port at the same time. Access speeds over the ports may differ.

The used size of the block RAM may be configurable. The size may be configured according to the number and/or sizes of the images to be stored. An image may have a predetermined maximum size, e.g. according to the size of the PR slot. This allows flexible and highly adaptive configuration of the FPGA. It may be considered that the images may have the same or different sizes, e.g., at most the maximum size, and/or may be compressed, e.g., via a data compression approach. In this case, a decompression may be performed during or in connection to transferring and/or installing and/or reconfiguration.

The FPGA may comprise general configuration memory, wherein the configuration memory comprises internal configuration memory and/or additional memory. An image for configuration or reconfiguration of a container may be stored in said configuration memory. The internal configuration memory may be fixed and/or predefined. The additional memory may be configured or configurable (e.g., in size and/or number of blocks and cells), e.g., based on availability of memory of the FPGA. The additional memory may especially be formed by BRAM. In some embodiments, internal configuration memory instead of additional memory (i.e. BRAM) may be used for the technique proposed herein.

Basically, the FPGA applies the method according to the invention.

BRAM may be pre-loaded with data at the time of configuring the FPGA. BR_AM may be configured as read-only memory, thus preventing a misconfiguration of a container. Alternatively, data may be written into BR_AM at a later time, especially at runtime. BR_AM may also be reconfigured during DPR. In one embodiment, one BR_AM port may have read-only access to stored data while another BRAM port has read-write access. The first port may be used for reading configuration data and the second port may be used for setting up configuration data.

Present invention may be implemented in different ways, particularly as a method, an FPGA, a computer program product and/or a storage medium as described herein. It is to be noted that features and/or advantages that are given with respect to one of those alternatives may be applicable or transferable for another one.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary FPGA; and
- Figure 2: shows another exemplary FPGA according to the invention.

### Detailed Exemplary Embodiments of the Invention

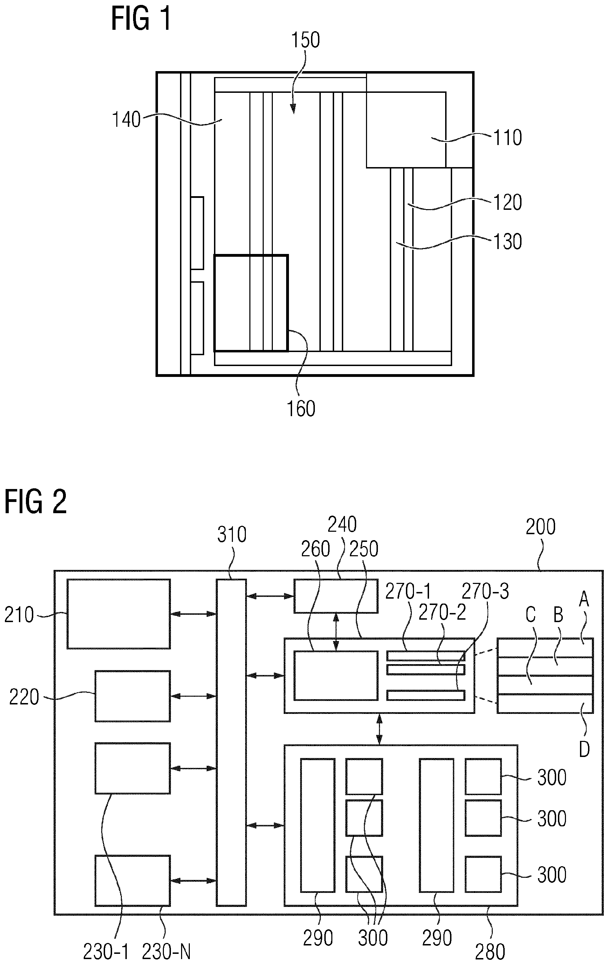

Figure 1 shows an exemplary FPGA 100 in a simplified diagram. For ease of reference, components most illustrative for the understanding the invention are referenced. Functional components of an FPGA 100 may correspond to regions and/areas of the surface of the FPGA 100. Some of the functional components of an FPGA 100 may comprise a controller 110 (e.g., a microcontroller and/or processor, e.g., an ARM processor), one or more DSP (Digital Signal Processor) regions 120, and/or one or more memory regions 130, as well as one or more ALM (Adaptive Logic Module) and/or distributed memory regions 140; a region, in particular region 140, may comprise functional blocks associated to the corresponding functionality, which may be adaptive.

The FPGA 100 may comprise an operation region 150, which may be adaptive when setting up the FPGA 100, but not during runtime of one or more applications. This region may be referred to as statically reconfigurable. While operation region 150 may be specifically configured for functionality when setting up the FPGA for operation, during actually executing one or more application (run-time), its functionality may be static or non-configurable. That does not preclude running software and/or applications on them which may perform dynamically, it refers to the logic functionality/hardware setup.

The FPGA may also comprise one or more dynamically reconfigurable regions 160, which may be referred to as PR slot/s or containers. Regions 150 and 160 may each comprise parts of functional regions or components 120, 130, 140. Next to the components mentioned, the FPGA may comprise further components, e.g., for interfacing, and/or Input/Output, power supply, connectivity, etc. Memory region 130 may comprise memory cells or blocks, e.g., BRAM or BRAM cells. Memory cells or blocks may be individually addressable and/or controllable, e.g., by a memory controller and/or controller 110.

A PR slot 160 may be reconfigurable during run-time, e.g., under control of a DPR controller. The DPR controller may be implemented by the controller 110, or separately thereof. The regions 160 may have rectangular form on the surface of the FPGA 100. Dynamic reconfiguration may refer to re-configuring the functionality/functional blocks or components in region 150 to provide different logic and/or functionality; the size, and/or components available in a PR slot 160 may be fixed during run-time (although in some cases, such may be configurable when setting up the FPGA and/or the operation region 150). In general, reconfiguration may comprise and/or be based on installing an image or bitstream (also referred to as configuration), e.g., by a DPR controller, from an internal configuration memory.

A PR-slot or container in general may execute an application, e.g., a hardware (HW) application, requiring a size equal or smaller than the size of the PR-slot. The size of the PR-slot may refer to the area size, and/or available memory and/or logic components (e.g., ALM), and/or processing and/or control capacity, e.g., in a DSP component. An application using the available size and/or functionality may be dynamically installed on a PR-slot, e.g., based on an image of the application. Such an image may be referred to as a bitstream or configuration, and/or be represented as file or multiple files. The image may define the logic and/or functionality and/or application of a PR slot 160 when installed on the PR slot 160. Installation may be controlled by a DPR controller. Installation during run-time, replacing an earlier installed image, may be referred to as dynamic reconfiguration, or shorter reconfiguration.

In general, dynamic reconfiguration may include initializing memory of the PR slot 160 (which may comprise and/or be associated to a configuration memory, or internal configuration memory), e.g., setting the memory to a predefined initial state. This may delete data in the memory. If the data (or part of it) is to be used by a new image or application, a lot of copying data from the memory of the PR slot to operation or system memory and back, before or after installing the new image, may be necessary, which can be time consuming, and may interfere with ongoing execution of application/s on the operation region.

Generally, to (re-)configure a FPGA device and/or a PR slot, the internal configuration memory may be initialized by downloading a so called bitstream file (or image) into the device, e.g., via a dedicated configuration interface. For each configurable element like LUTs (Look-Up Table), DSPs and routing channels of the reconfigurable area, certain locations in the SRAM of the configuration memory may be responsible and/or associated thereto. Consequently, the size of the configuration memory may correspond directly to the number and/or types of logic elements inside the device (or container). It is proposed to have a large configuration memory available to store different bitstreams (or images) in the device, so that it may be switched from one image to another without the need to load a new image via an external interface, e.g., from an external depository.

There is proposed an approach to optimize workflows for partial reconfiguration in FPGA devices. Available block memories may be used as optional configuration memory cells (e.g., representing an extended memory space, and/or additional memory for a configuration memory). Inside the extended memory space (configuration memory), alternative bitstreams may be stored in advance, so that the reconfigurable area can change the configuration of the programmable logic rapidly. Different extended memory spaces may be associated to different containers.

The FPGA may be constructed and/or configured and/or configurable accordingly, e.g., allowing spare BRAM to be used to store alternative partial configurations (images or bitstreams).

Figure 2 depicts a corresponding exemplary FPGA or FPGA device 200, which may be considered based on the device shown in Figure 1, with additional functionality associated to the configuration memory. FPGA 200 may comprise one or more processing circuitries 210 like one or more CPUs or processors or controllers or cores. There may be provided DMA (Direct Memory Access) functionality 220. The device 200 may comprise one or more connections or interfaces to peripherals 230-1 ... 230-N, e.g., to an external memory (e.g., external RAM) and/or database, e.g., a database or external depository providing bitstreams for PR slots/containers. A DPR controller 240 may be provided, which may be implemented separately and/or as part of processing circuitries 210.

The FPGA 200 comprises and/or is configured with and/or is configurable with one or more configuration memories 250, each of which may comprise an internal configuration memory 260, which may be connected or connectable to the DPR controller 240. A configuration memory 250 may comprise memory 270-1, 270-2, 270-3,... of the FPGA 200.

The FPGA may comprise and/or be configured and/or configurable with on or more containers 280, which may be also referred to as PR slots and/or reconfigurable areas or DPRs. A container 280 may comprise programmable logic 290 (e.g., elements as discussed in the context of Figure 1, and/or LUTs and/or DSP and/or routing channels, etc.), and associated memory 300, which may be considered local to the container 280. The memory 300 may be internal to the FPGA, and/or be configured and/or configurable for, and/or associated to, the container 280. In particular, the memory 300 may comprise one or more BRAM (Block RAM) or BRAM cells of the FPGA, e.g., of a memory region. To each container 280, there may be associated one configuration memory 250. For example, for each of a plurality of containers 280, there may be associated one configuration memory 250; different configuration memories 250 may be associated to different containers 280.

The components 210, ..., 300 may be interconnected for transfer of information or bits or data, e.g., connected to and/or interfaced to a bus 310, also referred to as bus interconnect or interconnect of interface.

It may be considered to provide one DPR controller 240, which may be connected to the one or more configuration memories 250, e.g., to control installation of an image to an associated container 280. Alternatively, there may be multiple DPR controllers, e.g., such that there is one DPR controller for each of a plurality of containers 280, or such that each DPR controller is connected to and/or associated to one or more (e.g., different) containers 280 and/or configuration memories 250. For example, differently sized controllers and/or controller interfaces may be associated to differently sized containers 280, or differently sized configuration memories 250. In some cases, there may be one or more memories 250 able to store only one image, and one or more extended configuration memories configured to store more than one image. Different (e.g., two different) or differently typed DPR controllers 240 may be used, e.g., for single-image memories and for multi-image memories.

In general, a DPR controller 240 may be configured or configurable to access the memory 250 and/or internal configuration memory 260, e.g., to install and/or control installation of an image onto container 280. A configuration memory 250 (e.g., the internal configuration memory 260) may be connected, and/or configured and/or configurable to be connected or connectable for transfer of information (e.g., an image) to the associated container 280, e.g., under control of DPR controller 240.

The internal configuration memory 260 of a configuration memory may comprise internal memory of the FGPA 200, e.g., BR_AM and/or BR_AM cells; this may be configured or configurable to the FPGA 200. One or more of the configuration memories 250 may represent extended or extendable configuration memories, which may comprise additional memory 270-1, 270-2. 270-3, which may comprise BRAM or BRAM cells of the FPGA.

The additional memory may be adapted to store one or more images for the associated container 280, such that more than one image for the associated container 280 may be stored at the same time in the configuration memory 250 (e.g., one in the internal configuration memory, and one or more in the additional memory). The additional memory 270-1, ..., 270-3 may be configured or configurable from BR_AM available for the FPGA, e.g., memory available when setting up the FPGA. The memory size may be a (e.g., integer) multiple of size of an image for the associated container 280. In the example, images A, B, C and D may be stored for container 280. Different memories 250 may store different numbers of images.

The internal configuration memory 260 may be utilized and/or be configured or configurable as transfer memory or cache, e.g., for transferring and/or installing an image. It may be considered that installing an image and/or reconfiguring comprises copying an image from additional memory to the internal configuration memory, before copying and/or transferring and/or installing the image to the container 280. However, in some cases, direct copying and/or transferring and/or installing from the additional memory may be considered, e.g., based on corresponding interface/s and/or connection/s being provided and/or configured and/or configurable.

It may in general be considered that within the exemplary simplified FPGA design, a configuration memory like an Extendable Configuration Memory or Memory Block may be integrated. The configuration memory or Extendable Configuration Memory may comprise dedicated Configuration Memory cells (e.g., for the internal configuration memory), as well as additional memory, e.g., otherwise unused Block Memories (BRAM). The configuration memory 250 or Extendable Configuration Memory Block may be connected to the Bus 310, which may which enable the processing circuitry 210 (e.g., CPU) to preload bitstreams, and to switch between the available configurations (e.g., utilizing the DPR controller 240) .

The approaches described may be very beneficial in different applications, such as, for example, for neural networks. In this case, several layers (of a neural network) may be stored as different configurations (images), which can be interchanged with minimal delay. It may be considered that local memory cells (of a container or PR slot) may preserve their content (e.g., selectively, when installing a new image) during reconfiguration. By leveraging this effect, data can be propagated from one layer to the next without any memory transfer. The data may stay in the same location while the surrounding logic is reconfigured to calculate the subsequent layer. This may be performed, e.g., based on a bitmap or table or data indicating which memory addresses and/or memory space/s to overwrite and/or re-initialize and/or which are to be protected and/or kept in their current status when installing the new image.

No additional configuration memory cells may be needed to offer instant reconfigurability. Existing spare BRAM memory cells may be used instead. A large variety of new industrial use cases for FPGAs may become feasible, which were not possible up to now given the long reconfiguration cycles of FPGAs.

A neural network may generally be an artificial neural network; in some cases, it may be referred to a model, and/or represented by a model. The neural network may comprise multiple layers. The layers may be of different type; in particular, the network may comprise an input layer, for receiving data to be evaluated and/or as training data as input or base data, and an output layer, providing processed data as output and/or result. Between input layer and output layer, there may be one or more hidden layers, which may be interconnected to receive output of one layer as input, and/or to provide its output as input for another layer.

The neural network may be linear, or non-linear. In some cases, the neural network may be recursive, e.g., such that the same layer (at least one layer) may be provided with output of a layer (e.g., itself, or a different layer) multiple times. A layer may operate based on matrix multiplication being applied on input. In some cases, a layer may operate based on convolution being applied on input. Base input may correspond to original data the network as a whole is intended to operate on to provide a result, which may be considered output of the last/output layer and/or the neural network as a whole.

In some variants, the neural network may be a CNN (Convolutional Neural Network), and/or may be utilized for object detection, and/or image analysis. It may be considered that in general, the neural network already may be trained and/or may be pre-trained, and/or that the neural network and/or its layers are implemented in a trained form; execution of the network may comprise, and/or pertain to (and/or be limited to), using the trained network, and/or using the network for inference. A layer of the neural network may be implemented as application (based on an installed image) in a reconfigurable slot of an FPGA.

A memory (e.g., internal memory of the FPGA, or local memory) may be addressable, and/or connected to a controller and/or operation range via a (data) bus and/or DMA (Direct Memory Access). In some cases, local memory 300 of one PR slot or configuration memory may not be accessible by another PR slot or configuration memory and/or an operation region without using DMA and/or the data bus, and/or without instruction and/or control by a controller, which may be external to the PR slot and/or configuration memory, and/or may the controller 210 of the FPGA and/or the DPR controller 240. Local memory of a configuration memory may be accessible for storing and retrieving images and/or bitstreams, e.g., based on control by the DPR controller and/or processing circuitry of the FPGA.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: FPGA
- 110: Controller
- 120: DSP region
- 130: memory region
- 140: ALM region
- 150: operation region
- 160: container / PR slot

- 200: FPGA
- 210: processing circuitry
- 220: DMA
- 230-1: peripheral
- 230-N: peripheral
- 240: DPR controller
- 250: configuration memory
- 260: internal configuration memory
- 270-1: additional memory
- 270-2: additional memory
- 270-3: additional memory
- 280: container/PR slot
- 290: programmable logic
- 300: local memory
- 310: bus

- A: image
- B: image
- C: image
- D: image

## Claims

1. Method of operating a Field Programmable Gate Array (100, 200), FPGA,
the FPGA comprising:
- Block RAM (250);
- a plurality of configurable logic elements;
- at least one container (160, 280), the at least one container (160, 280) comprising a respective predetermined subset of said logic elements;
- such that a configuration of elements in the respective container (160, 280) may be changed independently from a configuration of logic elements outside the respective container (160, 280);
the method comprising steps of:
- determining an available portion of the Block RAM (250);
- installing at least one image (A-D) into said portion of the Block RAM (250), the at least one image (A-D) comprising predetermined configuration data for said respective at least one container (160, 280); and
- dynamically configuring elements of said respective at least one container (160, 280) according to respective image (A-D) data in the Block RAM (250).

2. Method according to claim 1, wherein the Block RAM (250) is configured to hold different images (A-D) for one container (160, 280).

3. Method according to one of the preceding claims, wherein the number of images (A-D) stored in the configuration memory (250) is configurable.

4. Method according to one of the preceding claims, wherein the image (A-D) is downloaded from a depository external to the FPGA (100, 200).

5. Method according to claim 4, wherein multiple images (A-D) are downloaded to the Block RAM (250).

6. Computer program product, the computer program product comprising instructions causing processing circuitry (100, 110, 210) to perform a method according to one of the above claims when executed on the processing circuitry (100, 110, 210) .

7. Storage medium storing a computer program product according to claim 6.

8. Field Programmable Gate Array (100, 200), FPGA, the FPGA (100, 200) comprising
- a plurality of configurable logic elements;
- at least one container (160, 280), the respective container (160, 280) comprising a respective predetermined subset of said elements; wherein a configuration of elements in the respective container (160, 280) may be changed independently from a configuration of logic elements outside the respective container (160, 280);
- Block RAM (250), wherein the Block RAM (250) may be configured to hold at least one image (A-D), the at least one image (A-D) comprising predetermined configuration data for a respective container (160, 280) .

9. FPGA (100, 200) according to claim 8, wherein the FPGA is adapted to dynamically configure elements of said at least one container (160, 280) according to image (A-D) data in the Block RAM (250).

10. FPGA (100, 200) according to claim 8 or 9, wherein the Block RAM (250) is connectable to the associated container (160, 280).

11. FPGA (100, 200) according to one of claims 8 through 10, wherein the FPGA (100, 200) comprises a Dynamic Partial Reconfiguration, DPR, controller (240), wherein the DPR controller is adapted to control configuration of a container (160, 280) according to an image (A-D) that is stored in Block RAM (250).

12. FPGA (100, 200) according to one of claims 8 through 11, wherein the size of the Block RAM (250) that is used for storing an image (A-D) is configurable.

13. FPGA (100, 200) according to one of claims 8 through 12, wherein the FPGA comprises configuration memory which comprises internal configuration memory (260) and additional memory (270-1, 270-2, 270-3).

14. FPGA (100, 200) according to one of claims 8 through 13, wherein the FPGA comprises a first port and a second port to the Block RAM (250), each port allowing read or write access to the Block RAM (250) independently from the other port.
